# EUROPÄISCHE PATENTSCHRIFT

(11) **EP 2 641 022 B1**
(45) Veröffentlichungstag und Bekanntmachung des Hinweises auf die Patenterteilung: **01.04.2015**
(21) Anmeldenummer: 11801958.7
(22) Anmeldetag: 23.08.2011
(51) Int. Cl.: F23D 14/02, F23D 14/58, F23C 99/00

(54) **VERBRENNUNGSVERFAHREN UND MEMBRANE MIT KÜHLER FLAMMENWURZEL**
COMBUSTION METHOD AND MEMBRANE WITH COOL FLAME ROOT
PROCÉDÉ DE COMBUSTION ET MEMBRANE AVEC BASE DE FLAMMES FROIDE

(30) Priorität: 16.11.2010 DE 102010051414
(43) Veröffentlichungstag der Anmeldung: 25.09.2013
(73) Patentinhaber: Dreizler, Ulrich, 78595 Hausen ob Verena (DE)
(72) Erfinder: Dreizler, Ulrich, 78595 Hausen ob Verena (DE)
(74) Vertreter: Mammel und Maser
(86) Internationale Anmeldenummer: PCT/DE2011/001633
(87) Internationale Veröffentlichungsnummer: WO 2012/065582

(56) Entgegenhaltungen:
- WO-A1-01/86204
- WO-A1-93/18342
- DE-A1- 19 847 042
- DE-U1- 9 005 033
- DE-U1- 9 107 108
- JP-A- 9 170 725
- US-A- 3 472 601

## Beschreibung

### Stand der Technik

Die Erfindung geht aus von einem Verfahren zur vollständigen Verbrennung eines homogenen Gemisches aus Luft und Brennstoff (Gas und/oder Öl) nach der Gattung des Hauptanspruchs.

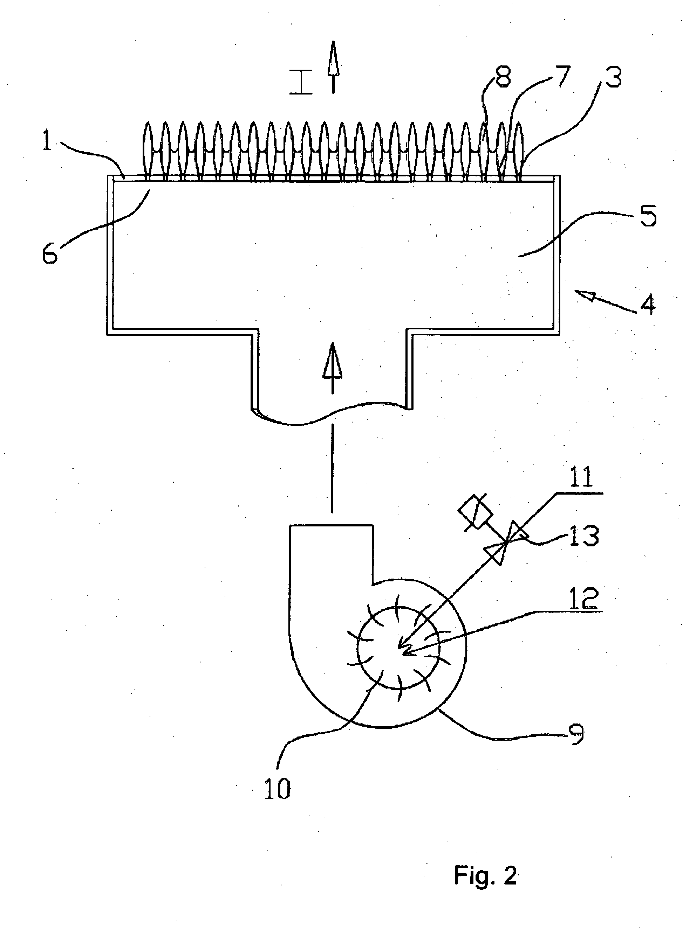

Durch die europäische Patentschrift EP O 628 146 B1 ist es bekannt ein Verbrennungsverfahren mittels einer Gewebemembrane durchzuführen, bei dem das aufgrund der zusätzlichen Öffnungen sich auf der Membrane während der Verbrennung einstellende Flammenfeld mit höheren Flammen durch ein regelmäßiges Muster dieser Querlöcher bewirkt wird, die eine Durchlassfläche der Membrane von 5-35% der gesamten Oberfläche der Membrane einnehmen, wobei die genannten Querlöcher (zusätzlichen Öffnungen) mittels die Membrane durchdringenden Stanzstiften (Anspruch 1, Zeilen 12 und 13) hergestellt werden. Wie in Figur 2 der Patentschrift gezeigt, können diese Querstanzlöcher abschnittsweise trichterförmig ausgebildet sein, wobei davon auszugehen ist, dass die Querlöcher von der Trichterseite, also der späteren Eingangsseite her, durch das Stanzwerkzeug hergestellt werden. Ein solches Stanzwerkzeug verlangt für die Schneidwirkung eine entsprechend trennend wirkende Matrize, deren Lochdurchmesser nur geringfügig größer ist, als der Außendurchmesser der Stanzstifte, was entsprechend zu einer glatten Schnittkante der Querlochmündung führt. Laut Druckschrift wird durch diese regelmäßige Anordnung eines bestimmten Durchgangs von Querlöchern ein gleichmäßiger Quergasstrom mit entsprechendem Verbrennungsprozess über der gesamten Metallfaserplatte bei nur geringem Druckabfall erreicht, so dass beim Einsatz keine einseitige Überlastung oder Überhitzung der Membrane erfolgt und wodurch der Leistungsbereich vergrößerbar ist trotz Erzielung niedriger NOx-Emissionen. Allerdings neigen derartige Membranen zu thermoakustischen Schwingungen. Bei den in dieser Patentschrift genannten sonstigen Vorteilen handelt es sich allerdings um bisher ungelöste Probleme wie den Ansprüchen 16 bis 19 entnehmbar ist, die für eine Schalldämmung eine extra Schicht beanspruchen. Jedenfalls wird das Verringern der Gefahr des Auftretens von Resonanzen in Verwendung mit dem regelmäßigen Muster der Querlöcher gesehen und natürlich auch deren Querschnitt. Nicht zuletzt soll diese bekannte Membrane auch für Blauflammenbrenner geeignet sein um damit niedrige CO und NOx Emissionen zu schaffen. Jedenfalls sind dieser europäischen Patentschrift die Probleme eines Verfahrens zur vollständigen Verbrennung eines homogenen Gemisches aus Luft und Brennstoff entnehmbar. Dies gilt insbesondere für die Temperaturgestaltung der höheren Flammen, wobei aufgrund der vagen Beschreibung in der Patentschrift, nämlich dass bei der Verbrennung sich einstellende Flammenfeld mit höheren Flammen durch ein regelmäßiges Muster dieser Querlöcher bewirkt wird und damit wohl auch gemeint ist, dass die höheren Flammen in etwa die gleiche jeweilige Flammtemperatur aufweisen, wobei allerdings über die niedrigen Flammen nur soviel ausgesagt ist, dass es sich auch um Blauflammen handeln könne. Auch die Ausführungen auf Seite 7 zu den "Resonanzerscheinungen" gehen davon aus, dass es sich um eine sehr heiße Oberseite, also der Brennseite der Membrane, handelt, was wiederum die Ausführungen als Einsatz der Membrane für Strahlungsbrenner untermauert, so dass solche Membranen für eine andere technische Lehre als das erfindungsgemäße Verbrennungsverfahren zuzuordnen ist.

In einem wissenschaftlichen Aufsatz in "Erfahrungsberichte" aus "GASWÄRME International (59), Seite 383" wird auf das Problem dieser Geräuschentwicklung, besonders auch bei Brennwertkesseln, eingegangen. So wird dort darauf hingewiesen, dass "ein Brennwertkessel Geräusche von ungeahnter Lautstärke produzieren" kann. Wobei außer dem Problem der Thermoakustik eine saubere Verbrennung und ein breiter Modulationsbereich mit maximaler Ausnutzung der Verbrennungswärme gewünscht ist. So kann es durchaus gefordert sein, dass mit einer Membrane verschiedene Leistungsbereiche gefahren werden müssen, ohne dass deshalb die NOx-Werte unzulässig steigen oder "schiefe Kesselmusik" entsteht. Der Wissenschaftler, der den Aufsatz verfasst hat, weist darauf hin "Die Verstärkereigenschaften der Flamme lassen sich durch Variierung des Flammenhalters, also des Brenners, beeinflussen. Einer der Parameter ist beispielsweise die unterschiedliche Ausströmgeschwindigkeit durch den Brenner, die direkt mit der Brennergeometrie zusammenhängt. Das komplizierte Problem des Zusammenhangs zwischen der Flamme und dem Rest des Brennwertkessels wurde bereits mehrfach an diversen niederländischen und internationalen Universitäten erforscht. Dennoch stehen noch keine eindeutigen Entstehungsregeln zur Verfügung. Die Entwicklung eines garantiert geräuschfreien (geräuscharmen) Brennwertkessel-Prototyps, der zudem auch noch den Anforderungen an Wirkungsgrad und Emissionswert entspricht, ist bisher also noch - Zukunftsmusik. In dieser Hinsicht ist noch viel Forschungsarbeit vonnöten." Zur Bedeutung bzw. Problematik und damit auch der der Erfindung zugrunde liegenden Aufgabe braucht hier wohl nichts mehr hinzugefügt zu werden.

Den Versuch, den Leistungsbereich eines Brenners mit Oberflächenverbrennung auch während des Betriebs zu vergrößern, unter Beachtung des Flammenabhebephänomens, bei verbleibendem niederen Giftanteil (NOx) im Abgas und im übrigen günstiger Verbrennung, ist der europäischen Patentschrift EP 0 549 476 B1 entnehmbar. Der dort gezeigte Vorschlag ist in der Praxis aber kaum verwirklichbar, da die jeweils zentralsymmetrische Anordnung der Durchgangsöffnungen unterschiedlichen Durchmessers äußerst schwierig herstellbar ist, abgesehen davon, dass mit dem dort beschriebenen Gegenstand in erster Linie ein Abheben der Flamme unterbunden werden soll. Jedenfalls ist weder eine Vergrößerung des Leistungsbereichs einer solchen symmetrisch gelochten Membrane angestrebt, noch eine Verminderung von NOx, ganz abgesehen vom Abbau oder Unterbinden eines Verbrennungsgeräusches. Letzteres dürfte sich aufgrund der beanspruchten Anordnung der Durchgangslöcher zueinander sogar noch verstärken.

Durch die gattungsgemäße Patentanmeldung (DE 198 47 042 A1), welche den oberbegriff des Ansprüche 1 und 4 offenbart, ist ein Verfahren zur vollständigen Verbrennung des vorgemischten Brennstoff-/Luft-Gemisches bekannt. Das Brennstoff-/Luft-Gemisch wird nach dem Durchströmen der Membrane an der als Brennseite dienenden Oberfläche derselben gezündet und dort als Flamme stabil gehalten. Bei Erhöhung der Leistung und damit der Geschwindigkeit des Durchtritts der Brennstoff-/Luft-Gemisch-Menge könnte allerdings die Flamme abheben, mit der Gefahr eines damit gefährlichen ungewollten Austritts von unverbrannten Gasen in den Feuerraum eines Kessels mit entsprechender Explosionsgefahr.

### Die Erfindung mit Aufgabe und Vorteilen

Der Erfindung liegt die Aufgabe zu Grunde das gattungsgemäße Verfahren bzw. die Membrane weiter zu entwickeln um weniger Anfälligkeit gegenüber thermoakustischen Schwingungen zu erzielen. Diese Aufgabe wird erfindungsgemäß durch die kennzeichnenden Merkmale des Anspruchs 1 und des Anspruchs 4 gelöst.

Durch ein Merkmal des gattungsgemäßen Teils des Anspruchs 1 der Erfindung ist für sich mehrfach bekannt, dass durch die zusätzlichen Öffnungen in der Membrane ein eigenes Flammenfeld mit höheren eine eigene Flammenwurzel aufweisenden Flammen besteht. Dieses Merkmal ist für sich mehrfach bekannt (DE 198 47 042 B4 und G 9005033.9). Bei der Erfindung ist jedoch die Flammenwurzel aufgrund des nachströmenden Brennstoff-/Luft-Gemisches schon verhältnismäßig kühl, wobei durch die Gestaltung der Mündungen dieser zusätzlichen Öffnungen diese Kühlung verstärkt wird. Maßgebend ist auch, dass die Flammenwurzeln dieser höheren Flammen keine unmittelbare Hitzestrahlung auf die Membrane ausüben. Zudem wird aufgrund besonderer Gestaltung der Mündungen der zusätzlichen Öffnungen nach Durchtritt des Brennstoff-/LuftGemisches an den Mündungen und deren Herausragen in den Brennraum eine Kühlung aufgrund des Ausdehnungseffekts erzielt. Diese Kühlung führt zu einer Verringerung des Giftanteils (NOx) im Abgas und zu einer Unterbindung von Schwingungsgeräuschen der Verbrennung. Außerdem wird durch die zusätzliche Anordnung von den Öffnungen in der Membrane auch ein Abreißen der Flammen unterbunden. Ein zusätzlicher Vorteil ist, dass ein Brennstoff-/Luft-Gemisch mit höherer Geschwindigkeit und größerer Menge die Membrane durchströmen kann, wobei die übrigen Gewebemembranenteile eine langsamere Durchdringung des Brennstoff-/Luft-Gemisches und damit eine gute Rückzündung und Flammenhaltung bewirken. Die zusätzlichen Öffnungen dienen in erster Linie dazu den ungehinderten Durchgang verschiedener auch wechselnder Brennstoff-/Luft-Mengen zu ermöglichen, um damit auch bei Lastwechsel ein Abreißen oder Abheben der Flamme zu unterbinden.

Diese für eine vollständige Verbrennung eines homogenen Gemisches aus Luft und Brennstoff maßgebenden Merkmale, zu denen auch das Abgas und die durch Schwingungsgeräusche gegebene Verlustleistung gehört, werden, wie der Stand der Technik zeigt, unterschätzt und bisher im Bereich der zugrundeliegenden Aufgabe nicht gelöst. So ist das Merkmal eine Kühlung der Flammenwurzel der größeren Flammen zu erzielen, von außerordentlicher Bedeutung. So wird beispielsweise beim Stand der Technik von heißen Oberflächen der Membranen gesprochen, um auch Strahlungswärme zu nutzen. Dies tritt besonders bei niedrigen Oberflächenbelastungen im kleineren Leistungsbereich auf, wohingegen bei größeren Leistungen die Flamme blau wird und keine glühenden Oberflächen mehr zu sehen sind. Bei der Erfindung hingegen wird durch Kühlhalten der Flammenwurzel auch bei größeren Leistungen die Oberfläche an den Ausmündungen punktuell glühend und die Wärme aus den Flammenwurzeln wird über die Membranenoberfläche abgeleitet und diese Flammenwurzel kühl halten. Aufgrund dieser Kühlhaltung und trotzdem Funktionsfähigkeit der Verbrennbarkeit von einem Brennstoff-/Luft-Gemisch wird natürlich der zulässige Leistungsbereich der Membrane, der ursprünglich, also bei Inbetriebnahme auf einen möglichst geringen Anteil an NOx, also optimales λ, eingestellt ist, stark vergrößert.

Nicht zuletzt hat die Gestaltung der Mündung dieser zusätzlichen Öffnungen einen äußerst starken Einfluss auf die möglichen Schwingungsgeräusche der Verbrennung, die je nach Gestaltung völlig unterbunden werden können. Bis jetzt war die Fachwelt erfolglos bemüht die Ursachen dieser Schwingungsgeräuschänderungen zu finden, um darauf deren Unterbindung aufzubauen. Man setzte Dämpfungsmembranen ein, bestimmte Lochgestaltungen usw. ohne tatsächlich Erfolg zu haben und ohne dass deshalb eine Vergrößerung des zulässigen Leistungsbereichs und damit des Giftanteils (NOx) verringert worden wäre oder sonstige Nachteile vermieden wären.

Bei einem gattungsgemäßen Merkmal des erfinderischen Verfahrens sind die zusätzlichen Öffnungen in an sich bekannter Weise als die beiden Seiten der Membrane verbindende Durchgangslöcher ausgebildet, wobei deren in den Brennraum ragende Ausmündungen die Flammenwurzeln formen, wodurch, wie oben beschrieben, eine Kühlung der Flammenwurzel erzielt wird. Eine derartige Kühlung kann möglicherweise auch mit anderen Mitteln erfolgen, maßgebend für die Erfindung ist jedoch dass sie stattfindet. Beim Stand der Technik geht es zwar auch um die Beherrschung von hohen Temperaturen an der Membrane, aber nicht um den Einfluss einer kühlen Flammenwurzel auf das gesamte Verbrennungsverfahren, wie er für die Merkmale der Erfindung mit einer Unterbindung der Geräuschentwicklung beansprucht wird.

Nach einer vorteilhaften Ausgestaltung des Verfahrens wird die Strömung vom Brennstoff-/Luft-Gemisch für die Erzeugung des flächigen niedrigen Flammenfeldes aufgrund der Porosität des Fasergewebes in bekannter Weise erzielt, wobei die zusätzlichen Öffnungen zur Erzeugung eines eigenen Flammenfeldes mit Flammen kühler Flammenwurzeln nicht nur in flachen Membranen einsetzbar ist, sondern auch in gewölbten oder rohrförmigen Membranen. Maßgebend ist die kühle Flammenwurzel zur Erzielung eines breiten Leistungsbereichs, bei dessen Änderung der NOx-Anteil im Abgas im zulässigen Bereich bleibt und dass bei der Verbrennung entstehende Schwingungsgeräusche nicht verstärkt werden.

Erfindungsgemäß werden aufgrund der Ausgestaltung der Mündungen der zusätzlichen Öffnungen Resonanzschwingungen bei deren Entstehen durch akustische Verstimmung sofort abgebaut oder sie können erst gar nicht entstehen. Natürlich setzt dieses voraus, dass die Flammenwurzel kühl ist. Eine vorteilhafte Gestaltung der Mündungen der zusätzlichen in der Membrane angeordneten Öffnungen ergibt, dass diese Durchgangslöcher im Wesentlichen senkrecht zur Oberfläche der Membrane verlaufen und erfindungsgemäß durch Verdrängen von Membranengewebe hergestellt werden bzw. entstehen. Hierbei sind die Mündungen als Ausfransungen unterschiedlichster Art gestaltet.

### Zeichnung

Ein Ausführungsbeispiel des Gegenstandes der Erfindung ist in der Zeichnung dargestellt und wird im folgenden näher beschrieben.

Es zeigen:
- Fig. 1: eine erfindungsgemäße Membrane in der Draufsicht;
- Fig. 2: einen Schnitt durch einen Brennerkopf und in verkleinertem Maßstab das dazugehörige Brennergebläse;
- Fig. 3 + 4: die erfindungsgemäße Membrane im vergrößerten Maßstab mit Mündungsgestaltung und
- Fig. 5: ein Diagramm mit NOx über kW des erfinderischen Verfahrens.

### Beschreibung des Ausführungsbeispiels

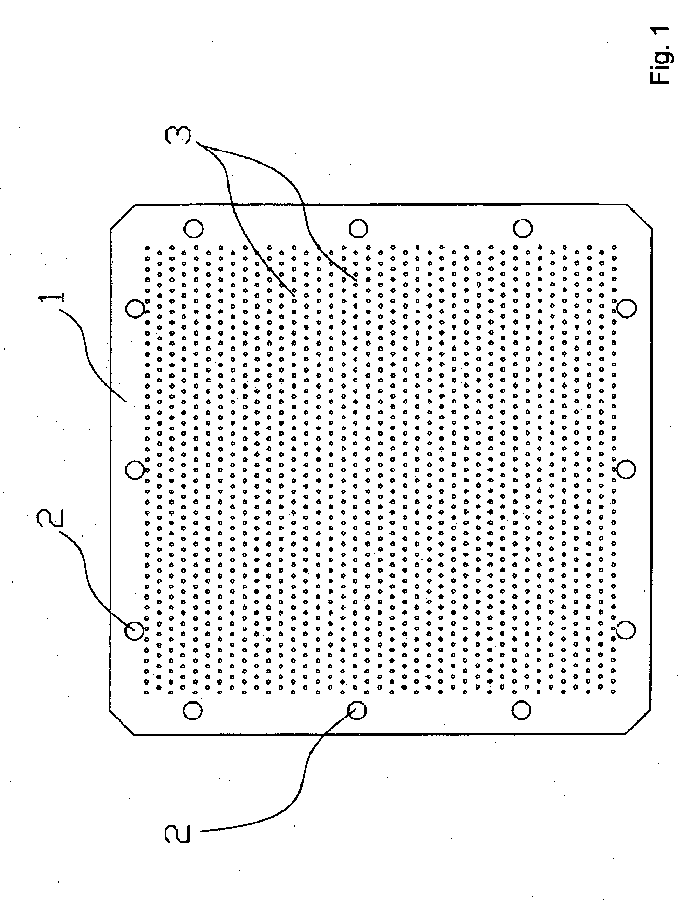

In Fig. 1 ist eine Membrane in der Draufsicht dargestellt, die in bekannter Weise aus hitzebeständigem, also feuerfestem Gewebe aus anorganischen Fasern besteht. Am Rand dieser Membrane 1 sind Löcher 2 angeordnet, mit denen die Membrane befestigt ist als Halterung beim Durchströmen eines homogenen Gemisches aus Luft und Brennstoff. In der Membrane sind in dem Gewebe eine Vielzahl von zusätzlichen Öffnungen 3 vorgesehen, über die das Brennstoff-/Luft-Gemisch leichter durchdringen kann als durch das Gewebe, so dass entsprechend diesen zusätzlichen Öffnungen 3 ein zusätzliches Flammenfeld von höheren Flammen entsteht als jenen Flammen, die als niederes Flammenfeld auf dem Gewebe gebildet ist. In Fig. 1 ist die Membrane als ebene Platte ausgebildet gezeigt. Sie kann aber auch gewölbt oder rohrförmig ausgebildet sein, so dass entsprechend einerseits der Krümmung das Brennstoff-/Luft-Gemisch zugeführt wird, während auf der dieser abgewandten Seite die Flammenfelder sind.

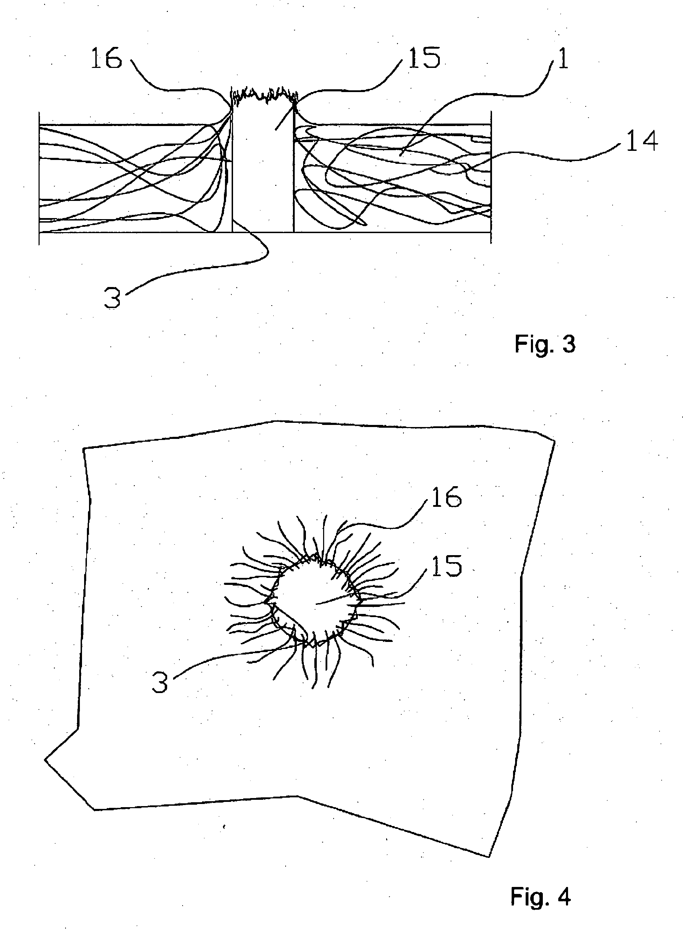

Bei dem in Fig. 2 dargestellten Brennerkopf 4 ist für die Membrane 1 ein Brennerrahmen 5 dargestellt, über den das Brennstoff-/ LuftGemisch der Membrane 1 zugeführt wird und in dem stromauf der Membrane 1 eine Flammenrückschlagsperre 6 (nicht näher dargestellt) angeordnet ist, d. h. ein hitzebeständiges Blech mit das Brenngemisch durchlassenden Bohrungen. Nach Durchströmen dieser Flammenrückschlagsperre 6 strömt das Brenngemisch durch Membrane 1 und Öffnungen 3 (in den Ansprüchen als zusätzliche Öffnungen bezeichnet), wobei durch in Fig. 3 gezeigte Abreißkanten an den Mündungen dieser Öffnungen 3 eine Abkühlung oder Kühlhaltung der in Fig. 2 dargestellten Flammenwurzeln 7 dieser zusätzlichen Flammen 8 erzielt wird. Zwischen diesen zusätzlichen Flammen 8, jedoch ohne Aufheizung der Flammenwurzeln 7 der zusätzlichen Flammen 8, ist ein Flammenfeld niedriger Flammen vorhanden, welches durch den Brennstoff-/Luft-Anteil gebildet wird, der über das Gewebe strömt.

Stromauf des Brennerkopfs 4 ist die Zufuhr von dem Brennstoff-/Luft-Gemisch vorhanden mit einem Gebläse 9, einem Ventilatorrad 10, einer Brennstoffzuleitung 11 und einer Luftzuleitung 12. In der Brennstoffzuleitung 11 ist ein Magnetventil 13 angeordnet. Während sich bei bekannten Verbrennungsverfahren im Gebläse 9 oder bei der Verbrennung an der Membrane 1 entwickelnde Geräusche über Resonanzen manchmal bis zur nahezu Unerträglichkeit verstärken können, wird bei der Erfindung durch die Gestaltung der Öffnungen dies durch Verstimmen der Schwingungen in den Öffnungen unterbunden. Jedenfalls ist Voraussetzung, dass die Flammenwurzel 7 kühl gehalten wird und dass die Mündungen der Öffnungen 3 eine Gestaltung aufweisen, gemäß der diese in Feuerungsrichtung I weisen. Dies kann beispielsweise ein Feuerraum eines Kessels sein.

In Fig. 3 und Fig. 4 ist die Gestaltung einer solchen zusätzlichen Öffnung dargestellt. Die aus Gewebe 14 eines Edelstahls bestehende Membrane 1 ist mittels eines Doms 15 durchdrückt, so dass die Mündungen 16 ausgefranst sind. Für den Fachmann überraschend wird durch diesen Effekt, nämlich der Ausgestaltung der Mündung der Öffnungen 3 in Richtung I der Feuerung, eine Resonanzbildung von durch eine Vorrichtung oder bei der Verbrennung entstehenden Geräuschen unterbunden.

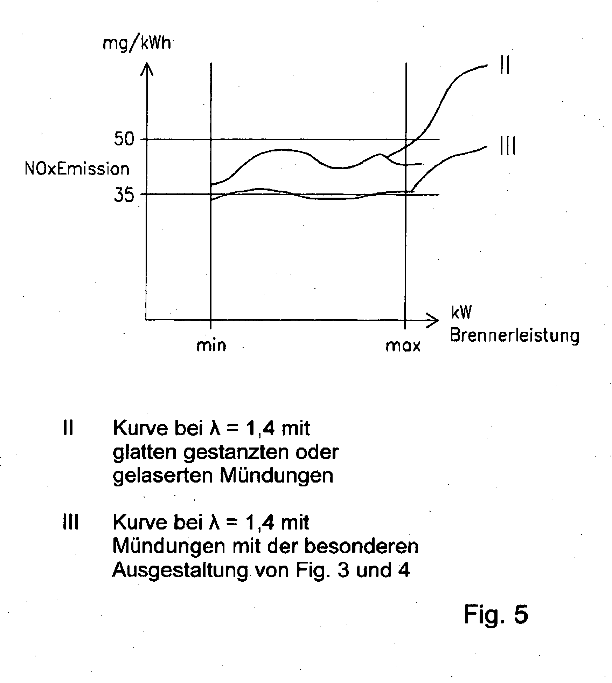

Diese besonderen Vorteile sind Fig. 5 entnehmbar, in der für ein Optimum, nämlich stöchiometrischen Gemisches von Brennstoff und Luft mit λ = 1,4, ein großer Arbeitsbereich ohne Verbrennungsnachteil erzielbar ist.

In dem in Fig. 5 dargestellten Diagramm ist über der Hypotenuse die NOx-Emission in mg/kWh dargestellt und über der Abszisse die Brennerleistung in kW. Bezeichnend ist für derartige Membrane, dass bei einem normalerweise angestrebten stöchiometrischen Gemisch von λ = 1,4 und bei Öffnungen 3 mit glatter gestanzter oder gelaserter Ausgangskante auch bei Änderung der Brennerleistung die NOx-Emission, wie in Kurve II gezeigt, sich unbestimmbar ändert. Anders ist es bei der Kurve III für eine gestaltete Mündung 16 der zusätzlichen Öffnung 3 mit in den Brennraum ragenden Ausfransungen. Der NOx Anteil ist hierbei deutlich geringer bei überraschender Unterbindung von Geräuschverstärkungen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Membrane
- 2: Löcher
- 3: Öffnungen
höheres Flammenfeld mit Löchern 3 niedrigeres Flammenfeld auf Gewebe
- 4: Brennerkopf
- 5: Brennerrahmen
- 6: Flammenrückschlagsperre
- 7: Flammenwurzel
- 8: zusätzliche Flammen
- 9: Gebläse
- 10: Ventilatorrad
- 11: Brennstoffzuleitung
- 12: Luftzuleitung
- 13: Magnetventil
- 14: Gewebe
- 15: Dorn
- 16: Mündung

- I: Feuerungsrichtung
- II: glatte Mündung
- III: gefranste Mündung

## Patentansprüche

1. Verfahren zur vollständigen Verbrennung eines homogenen Gemisches aus Luft und Brennstoff,
- mittels einer stromauf einer Brennseite und stromab einer der Zuleitung (12) des Brennstoff-/Luft-Gemisches dienenden Einrichtung angeordneten und für das Gemisch durchlässigen Gewebemembrane (1) aus anorganischen Edelmetallfasern,
- mit einer Eintrittsseite der Gewebemembrane (1) für das Brennstoff/Luft-Gemisch auf der der Brennseite der Membrane (1) abgewandten Membranenseite,
- mit einer der Eintrittsseite der Membrane (1) abgewandten die Brennseite bildende Austrittsseite derselben, auf der die Verbrennung unmittelbar stattfindet und die bei der Flammenzündung und deren Stabilisierung mitwirkt,
- mit Erzeugung eines flächigen und niedrigen Flammenfeldes durch das Brennstoff-/Luft-Gemisch auf der Austrittsseite des Gewebes (14) der Membrane (1) und
- mit zusätzlichen Öffnungen (3) in der Membrane (1) für den zusätzlichen Brennstoff/Luft-Gemisch-Durchlass und zur Erzeugung eines eigenen Flammenfeldes (8) mit höheren eigene Flammenwurzeln (7) aufweisenden Flammen (7),
- wobei die Flammenlänge der an den zusätzlichen Öffnungen (3) brennenden Flamme (8) aufgrund der Ausströmungsgeschwindigkeit höher als im Bereich der Membran (1) ohne zusätzliche Öffnungen (8) ist,
- und wobei die Flammenwurzeln (7) dieser höheren Flammen (8) kühl gehalten werden, indem
die Mündungen (16) der zusätzlichen Öffnungen der Membrane (1) eine unregelmäßige Gestaltung aufweisen,
**dadurch gekennzeichnet**
- dass die Mündungen (16) der zusätzlichen Öffnungen (8) außerdem in Flammenrichtung über die Austrittsseite des Gewebes (14) herausragen,
- dass die zusätzlichen Öffnungen (8) als die beiden Seiten der Membrane verbindende Durchgangslöcher ausgebildet sind, deren Mündungen (16) die Flammenwurzel formend aus der jeweiligen Öffnung (3) auf der Austrittsseite des Gewebes (14) heraus in den Brennraum ragen und
- dass die Mündungsgestaltung durch Veränderungen von Membrangewebe (14) entsteht wodurch sich Ausfransungen (16) des Mündungsrandes ergeben.

2. Verfahren nach Anspruch 1,
**dadurch gekennzeichnet**,
dass die Strömung des Brennstoff-/Luft-Gemisches für die Erzeugung des flächigen niederen Flammenfeldes aufgrund der Porosität des Fasergewebes (14) erzielt wird und dass die zusätzlichen Öffnungen (3) zur Erzeugung eines eigenen Flammenfeldes mit Flammen (8) kühler Flammenwurzeln (7) entstehen, sowohl in flachen Membranen als auch in gewölbten oder rohrförmigen Membranen.

3. Verfahren nach einem der vorhergehenden Ansprüche,
**dadurch gekennzeichnet**,
dass aufgrund der Ausgestaltung der Mündungen (16) der zusätzlichen Öffnungen (3) Resonanzschwingungen bei deren Entstehen sofort abgebaut werden oder gar nicht erst entstehen können.

4. Brennermembrane, insbesondere einsetzbar nach einem der vorhergehenden Ansprüchen,
- wobei die Gewebemembrane aus Metallschichten nur aus Edelstahl bestehen,
- mindestens zwei Faserschichten übereinander vorhanden sind und
- die Faserschichten miteinander versintert sind,
- mit einer Eintrittsseite der Gewebemembrane für das Brennstoff-/Luft Gemisch auf der der Brennseite der Membrane abgewandten Membranseite,
- mit einer der Eintrittseite der Membrane abgewandten die Brennseite bildende Austrittsseite derselben, auf der die Verbrennung unmittelbar stattfindet und die bei der Flammenzündung und deren Stabilisierung mitwirkt,
- mit zusätzlichen Öffnungen (03) in der Membrane (01) für den zusätzlichen Brennstoff-/ Luft Gemisch - Durchlass, **dadurch gekennzeichnet**
- dass die Mündung (16) der zusätzlichen Öffnungen (03) der Membrane (01) eine unregelmäßige Gestaltung aufweist,
- dass die Mündung (16) der zusätzlichen Öffnungen (03) außerdem in Flammenrichtung über die Austrittsseite des Gewebes (14) herausragt,
- dass die zusätzlichen Öffnungen (03) als die beiden Seiten der Membrane (01) verbindende Durchgangslöcher ausgebildet sind, deren Mündung (16) die Flammenwurzel formend aus der jeweiligen Öffnung auf der Austrittsseite des Gewebes (14) heraus in den Brennraum ragen kann und
- dass die Mündungsgestaltung durch eine bei der Öffnungsherstellung gegebene Fasermaterialverdrängung erfolgt, wodurch sich Ausfransungen des Mündungsrandes ergeben.

## Claims

1. Method for complete combustion of a homogeneous mixture of air and fuel,
- by means of a woven fabric membrane (1) composed of inorganic precious metal fibers disposed upstream from a combustion side and downstream from a device that serves as a feed of the fuel/air mixture, and is permeable for the mixture,
- having an entry side of the woven fabric membrane (1) for the fuel/air mixture on the membrane side facing away from the combustion side of the membrane (1),
- having an exit side of the membrane (1), facing away from the entry side of the latter, forming the combustion side, on which combustion takes place directly, and which takes part in flame ignition and stabilization thereof,
- with generation of a planar and low flame field by means of the fuel/air mixture on the exit side of the woven fabric (14) of the membrane (1), and
- having additional openings (3) in the membrane (1) for additional fuel/air mixture passage and for generation of a flame field having higher separate flames (8) having separate flame roots (7),
- wherein the length of the flame (8) on the additional openings (3) is higher than in the area of the membrane (1) without additional openings (3) due to the exhaust velocity,
- and wherein the flame roots (7) of the higher flames (8) are kept cool, in that the orifices (16) of the additional openings (3) of the membrane (1) have an irregular configuration,
**characterized in**
- that the orifices (16) of the additional openings (3) furthermore projects beyond the exit side of the woven fabric (14),
- the additional openings (3) are configured as passage holes that connect the two sides of the membrane (1), whose orifices (16), forming the flame root, project out of the opening (3), in each instance, on the exit side of the woven fabric (14) into the combustion chamber, forming their orifices (16)
- and that orifice configuration occurs by modification of the woven fabric (14) in the form of fraying (16) of the orifice edge.

2. Method according to claim 1,
**characterized in**,
- that the flow of the fuel/air mixture for generation of the planar low flame field is achieved on the basis of the porosity of the fiber fabric (14), and that the additional openings (3) for generation of a separate flame field with flames (8) having cool flame roots (7) occur, not only in flat membranes but also in domed or tubular membranes.

3. Method according to one of the preceding claims, **characterized in**,
- that because of the configuration of the orifices (16) of the additional openings (3), resonance vibrations are immediately reduced when they occur, or cannot occur in the first place.

4. Burner membrane, particularly one that can be used according to one of the preceding claims,
- wherein the woven fabric consist of layers only of stainless steel,
- at least two fiber layers are present one on top of the other and,
- the fiber layers are sintered to one another,
- an entry side of the woven fabric membrane for the fuel/air mixture on the membrane side facing away from the combustion side of the membrane,
- an exit side of the membrane, facing away from the entry side of the later, forming the combustion side, on which combustion takes place directly, and which takes part in flame ignition and stabilization thereof,
- with additional openings (03) in the membrane (01) for additional fuel/air mixture passage,
**characterized in**,
- that the orifice (16) of the additional openings (03) of the membrane (01) have an irregular configuration,
- that the orifice (16) of the additional openings (03) furthermore projects beyond the exit side of the woven fabric (14),
- that the additional openings (03) are configured as a passage holes that connect the two sides of the membrane (01), whose orifice (16) forming the flame root project out of the opening, in each instance, on the exit side of the woven fabric (14) into the combustion chamber and
- that the configuration of the orifice takes place by means of displacement by producing the openings resulting in the form of frayings of the orifice edge.

## Revendications

1. Procédé permettant la combustion complète d'un mélange homogène d'air et de carburant
- au moyen d'une membrane de tissu (1) en fibres inorganiques de métal précieux, perméable au mélange et disposée en amont d'un côté combustion et en aval d'un dispositif servant à l'amenée (12) du mélange carburant/air,
- avec un côté entrée de la membrane de tissu (1) pour le mélange carburant/air lequel est situé du côté de la membrane opposé au côté combustion de la membrane (1),
- avec un côté sortie de la membrane (1) situé à l'opposé du côté entrée de celle-ci et formant le côté combustion au niveau même duquel se produit la combustion et qui participe à l'allumage des flammes et à leur stabilisation,
- avec la réalisation d'un champ de flammes étendu et bas, produit par le mélange carburant/air sur le côté sortie du tissu (14) de la membrane (1) et
- avec des ouvertures supplémentaires (3) ménagées dans la membrane (1) pour laisser passer du mélange carburant/air supplémentaire et pour produire un champ de flammes (8) à soi avec des flammes (8) plus hautes présentant des bases de flammes (7) à soi.
- la longueur des flammes (8) brûlant au niveau des ouvertures supplémentaires (3) étant, en raison de la vitesse d'écoulement, plus haute que dans la zone de la membrane (1) dépourvue d'ouvertures supplémentaires (3),
- et la base de flamme (7) de ces flammes plus hautes (8) étant maintenue froide en ce que les embouchures (16) des ouvertures supplémentaires de la membrane (1) présentent une forme irrégulière,
**caractérisé en ce que**
- les embouchures (16) des ouvertures supplémentaires (3) font en outre saillie, dans le sens des flammes, du côté sortie du tissu (14),
- les ouvertures supplémentaires (3) sont réalisées sous forme de trous de passage qui relient les deux côtés de la membrane et dont les embouchures (16), sortant hors des ouvertures respectives (3) ménagées sur le côté sortie du tissu (14) pour former la base des flammes, se dressent dans la chambre de combustion et
- la forme des embouchures est obtenue par des modifications réalisées au niveau du tissu membranaire (14), lesquelles provoquent des effilochements (16) du bord de l'embouchure.

2. Procédé selon la revendication 1,
**caractérisé en ce que**
l'écoulement du mélange carburant/air nécessaire à la production du champ de flammes étendu et bas est obtenu grâce à la porosité du tissu fibreux (14) et **en ce que** les ouvertures supplémentaires (3) sont conçues pour produire un champ de flammes à soi avec des flammes (8) à base froide (7), et cela aussi bien dans des membranes planes que dans des membranes bombées ou tubulaires.

3. Procédé selon l'une quelconque des revendications précédentes,
**caractérisé en ce que**
en raison de la conception des embouchures (16) des ouvertures supplémentaires (3), des oscillations de résonance sont éliminées dès leur apparition ou ne sont pas même en mesure d'apparaître.

4. Membrane de brûleur, utilisable en particulier selon l'une, quelconque des revendications précédentes,
- la membrane de tissu se composant de couches métalliques réalisées uniquement en acier spécial,
- au moins deux couches de fibres superposées étant présentes et
- les couches de fibres étant agglomérées entre elles par sintérisation,
- avec un côté entrée de la membrane de tissu pour le mélange carburant/air lequel est situé sur le côté de la membrane opposé au côté combustion de la membrane,
- avec un côté sortie de la membrane situé à l'opposé du côté entrée de celle-ci et formant le côté combustion au niveau même duquel se produit la combustion et qui participe à l'allumage des flammes et à leur stabilisation.
- avec des ouvertures supplémentaires (03) ménagées dans la membrane (01) pour laisser passer de manière supplémentaire le mélange carburant/air,
**caractérisé en ce que**
- l'embouchure (16) des ouvertures supplémentaires (03) de la membrane (01) présente une forme irrégulière,
- l'embouchure (16) des ouvertures supplémentaires (03) fait en outre saillie, dans le sens des flammes, du côté sortie du tissu (14),
- les ouvertures supplémentaires (03) sont réalisées sous forme de trous de passage qui relient les deux côtés de la membrane (01) et dont l'embouchure (16), sortant hors de l'ouverture respective ménagée sur le côté sortie du tissu (14) pour former la base de la flamme, peut se dresser dans la chambre de combustion et
- la forme des embouchures est obtenue par un déplacement de matériau fibreux réalisé lors de la fabrication des ouvertures lequel provoque des effilochements du bord de l'embouchure.
